# EUROPÄISCHE PATENTSCHRIFT

(11) **EP 2 655 904 B1**
(45) Veröffentlichungstag und Bekanntmachung des Hinweises auf die Patenterteilung: **03.01.2018**
(21) Anmeldenummer: 11776708.7
(22) Anmeldetag: 26.10.2011
(51) Int. Cl.: F16C 1/14, B60J 7/057

(54) **STEIGUNGSKABEL MIT EINEM VON EINER WENDEL UMWICKELTEN FLEXIBLEN KERN**
PITCHED CABLE HAVING A FLEXIBLE CORE AROUND WHICH A COIL IS WRAPPED
CÂBLE À PAS COMPRENANT UN NOYAU FLEXIBLE ENVELOPPÉ D'UNE SPIRE

(30) Priorität: 23.12.2010 DE 102010055809
(43) Veröffentlichungstag der Anmeldung: 30.10.2013
(73) Patentinhaber: Gemo D.G. Moritz GmbH & Co. Kg, 12277 Berlin (DE)
(72) Erfinder: RODENHÄUSER, Ernst, 64380 Roßdorf (DE)
(74) Vertreter: Hausfeld, Norbert
(86) Internationale Anmeldenummer: PCT/EP2011/005394
(87) Internationale Veröffentlichungsnummer: WO 2012/084082

(56) Entgegenhaltungen:
- DE-A1- 3 841 460
- DE-A1-102006 021 650
- US-A- 2 484 485

## Beschreibung

Die Erfindung betrifft ein Steigungskabel mit einem von einer Wendel umwickelten flexiblen Kern. Der Kern ist üblicherweise mehrlagig aus gegenläufig gewickelten Drähten aufgebaut. Um den Kern ist eine Wendel aus Draht in fester Pressung gewickelt. Ein an einem Ende befestigter Mitnehmer dient zur Ankoppelung an ein anzutreibendes Element, z. B. das Schiebedach eines Kraftfahrzeuges. Ein solches Steigungskabel ist z.B. in der DE 10 2006 021 650 A1 offenbart. Über das Steigungskabel werden erhebliche, in Achsrichtung des Kabels wirkende Kräfte auf das Schiebedach übertragen und können sowohl beim Öffnen als auch beim Schließen des Schiebedaches, also in beiden Richtungen, auftreten. Dazu ist der Mitnehmer mit entsprechender Belastbarkeit am Steigungskabel zu befestigen.
Bei marktüblichen bekannten Konstruktionen überragt der Kern an einem Ende des Steigungskabels die Wendel und durchläuft in diesem Endbereich eine Bohrung des Mitnehmers. Gegen die Enden der Bohrung stützt sich auf einer Seite das Ende der Wendel und am anderen Ende ein auf dem Kern befestigter Anschlagkörper ab. Dadurch ist spielfreie Abstützung in beiden Richtungen gesichert. Der Anschlagkörper kann auf dem Kern mit hoher Kraft festgesetzt sein, beispielsweise ist er aus Metall ausgebildet und wird auf dem Kern verklemmt.

Bei bekannten Konstruktionen dieser Art stützt sich der Mitnehmer unmittelbar gegen das Ende der Wendel ab. Diese ist zwar durch sehr festes, plastisch verformendes Wickeln auf dem Kern gut befestigt, jedoch liegt die Kraft, bei der die Wendel nachgibt und auf dem Kern in Achsrichtung verschoben wird, in einem Bereich, der unter schwierigen Bedingungen, z. B. bei angefrorener Schiebedachdichtung zu dessen Bewegung noch übertragen werden muss.

Versuche, das Ende der Wendel auf dem Kern besser zu befestigen, z. B. mittels Kunststoffverklebung, führten nicht zu ausreichender Erhöhung der Festigkeit. Verlötungen kommen wegen der hohen Temperaturbelastung nicht in Frage. Beim Löten über den typischen Zeitraum von z. B. einer Minute auftretende Temperaturen von 800 bis 900° C, wie sie typischerweise beim Löten benötigt werden, führen zu thermischen Schwächungen der Materialien des Steigungskabels.

Die Aufgabe der vorliegenden Erfindung besteht darin, die vom Steigungskabel auf den Mitnehmer übertragbaren Kräfte zu erhöhen.

Diese Aufgabe wird mit den Merkmalen des Anspruches 1 gelöst.

Erfindungsgemäß ist der freie Endbereich des Kernes durch die Bohrung des Mitnehmers gesteckt und am überstehenden Ende mit dem Anschlagkörper versehen, der z. B. verklemmt ist. An dem kritischen Ende der Wendel ist ein diese und den Kern umschließender Metallgusskörper vorgesehen, der also formschlüssig auf der Wendel und dem Kern sitzt und wegen der hohen Festigkeit des Metalls sehr hohe Kräfte auf das Steigungskabel überträgt, wovon ein großer Teil unmittelbar auf den Kern übertragen wird. Die bisher bei höheren Kräften auftretenden Verschiebungen des Endes der Wendel auf dem Kern sind bei dieser Konstruktion nicht zu befürchten.

Vorzugsweise gemäß Anspruch 2 ist zwischen den aneinanderliegenden Flächen des Metallgusskörpers und des Mitnehmers ein drehhindernder Formschluss vorgesehen. Dadurch wird auf sehr einfache Weise das unerwünschte Verdrehen des Mitnehmers gegenüber dem Steigungskabel verhindert.

Vorteilhaft gemäß Anspruch 3 ist der Metallgusskörper als Zinkdruckgusskörper ausgebildet. Zinkdruckguss zeichnet sich durch besonders geringe thermische Belastung aus. Der beim Zinkdruckguss auf das Material des Steigungskabels ausgeübte Temperaturschock ist auf eine Zeitdauer von wenigen Zehntel Sekunden begrenzt, bei Temperaturen, die unter den eingangs genannten Löttemperaturen liegen.

Es wird also bei hoher struktureller Festigkeit des Metallgusskörpers auch für geringe Schädigung der strukturellen Festigkeit des Steigungskabels gesorgt.

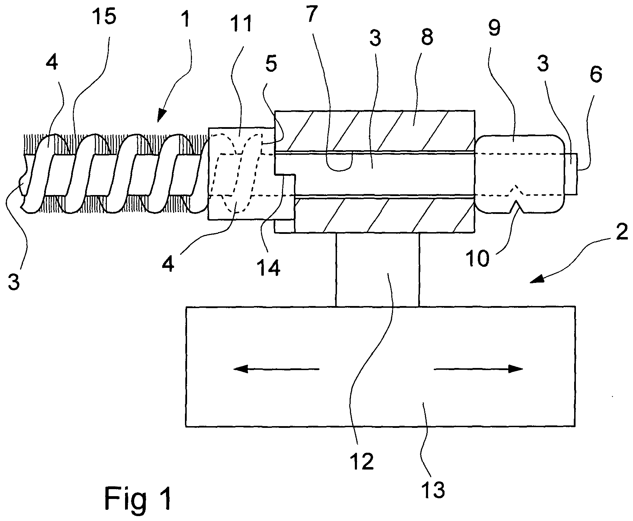

In der Zeichnung ist die Erfindung beispielsweise und schematisch in einer einzigen Fig. 1 dargestellt, die in Seitenansicht den Endbereich eines Steigungskabels mit Mitnehmer zeigt.

Fig. 1 zeigt den Endbereich eines Steigungskabels 1 mit daran befestigtem Mitnehmer 2.

Das Steigungskabel 1 weist einen Kern 3 auf, der aus verdrehten Drähten besteht. Der Kern 3 ist mit einer Wendel 4 umwickelt, die sehr fest um den Kern 3 gewickelt ist und somit hohe Kräfte in Achsrichtung des Kernes 3 aufnehmen kann.

Die Wendel 4 endet bei 5, also vor dem Ende 6 des Kernes 3. Der dazwischen liegende Endbereich des Kernes 3 liegt frei.
Dieser freie Endbereich des Kernes 3 durchläuft eine Bohrung 7 in einem Bohrungsteil 8 des Mitnehmers 2. Am Ende des Kernes 3 ist ein Anschlagkörper 9 vorgesehen, der auf dem Kern 3 befestigt ist. Im dargestellten Ausführungsbeispiel besteht der Anschlagkörper 9 aus verformbarem Metall und ist mit einem Schlag an der Kerbe 10 auf dem Kern 3 festgesetzt. Er liegt mit einer Fläche gegen das Ende des Bohrungsteiles 8, während das andere Ende des Bohrungsteiles 8 gegen das Ende 5 der Wendel 4 liegt.
Um bei hohen Kräften eine Verformung des freien Endes 5 der Wendel 4 gegenüber dem Kern 3 zu verhindern, ist der Endbereich der Wendel 4 mit einem in Zinkdruckguss ausgeführten Metallgusskörper 11 umschlossen. Das Material des Metallgusskörpers 11 umschließt den Endbereich der Wendel 4 und die Oberfläche des Kernes 3 in formschlüssigem Oberflächeneingriff. Sehr hohe Betätigungskräfte können somit von dem Metallgusskörper 11 direkt auf den Kern 3 übertragen werden. Verformungen des Endbereiches der Wendel 4 sind nicht zu befürchten.

Der Bohrungsteil 8 des Mitnehmers 2 ist über einen Verbindungssteg 12 an einem Schieberteil 13 des Mitnehmers befestigt, der in Pfeilrichtung, also in Richtung der Achse des Steigungskabels 1 verschoben werden soll, um beispielsweise ein an dem Schieberteil 13 angreifendes Schiebedach zu verschieben.
Es könnten störende Verdrehungen des Mitnehmers 2 um die Achse des Steigungskabels 1 auftreten. Um diese zu verhindern ist eine feste Drehkopplung der beiden Teile wünschenswert.

Dazu sind die aneinanderstoßenden Flächen des Metallgusskörpers 11 und des Bohrungsteiles 8 des Mitnehmers 2, wie dies die Fig. 1 zeigt, mit einem Vorsprung 14 derart ineinandergreifend ausgebildet, dass sich ein Drehformschluss zwischen den beiden Teilen ergibt.

In der in Fig. 1 dargestellten Montageform ist der Mitnehmer 2 über sein Bohrungsteil 8 fest zwischen dem Metallgusskörper 11 und dem Anschlusskörper 9 eingespannt.

Die Herstellung der in der Fig. 1 dargestellten Konstruktion ist sehr einfach.

Ausgegangen wird von einem z. B. endlos angelieferten Steigungskabel 1 in der dargestellten Ausführungsform, bei dem zwischen den Windungen der Wendel 4 die übliche lärmmindernde Beflockung 15 vorgesehen ist. Es wird nun der Kern 3 am Ende 6 abgeschnitten und im Endbereich zwischen dem Ende 6 des Kerns und dem Ende 5 der Wendel 4 von dieser befreit. Anschließend wird in einer nicht dargestellten Form Zinkgussmaterial in den Raumbereich des Metallgusskörpers 11 eingespritzt. Es wird nun der Mitnehmer 2 mit der Bohrung 7 aufgeschoben und dann der Anschlusskörper 9 aufgeschoben und mit einem Kerbschlag bei 10 verklemmt.

Der Mitnehmer 2 kann auf unterschiedliche Weise je nach Anwendungsgebiet variiert werden. Bei Bedarf kann der bei 14 dargestellte Drehformschlusseingriff weggelassen werden, oder z. B. auch zwischen dem Bohrungsteil 8 und dem Anschlagkörper 9 ausgebildet sein.

## Patentansprüche

1. Steigungskabel (1) mit einem von einer Wendel (4) umwickelten flexiblen Kern (3), mit einem Mitnehmer (2) und einem Anschlagkörper (9), wobei der Kern (3) mit einem Endbereich die Wendel (4) überragt und eine Bohrung (7) des Mitnehmers (2) durchsetzt, der sich an einem Ende der Bohrung (7) gegen das Ende (5) der Wendel (4) und am anderen Ende der Bohrung (7) gegen den auf dem Ende des Kernes (3) befestigten Anschlagkörper (9) abstützt, wobei der Endbereich der Wendel (4) mit einem die Wendel (4) und den Kern (3) umschließenden Metallgusskörper (11) versehen ist.

2. Steigungskabel nach Anspruch 1, **dadurch gekennzeichnet, dass** die aneinanderstoßenden Flächen des Metallgusskörpers (11) und des Mitnehmers (2) mit deren relative Verdrehung um den Kern (3) verhinderndem Formschlusseingriff (14) ausgebildet sind.

3. Steigungskabel nach einem der vorhergehenden Ansprüche, **dadurch gekennzeichnet, dass** der Metallgusskörper (11) als Zinkdruckgusskörper ausgebildet ist.

## Claims

1. A pitched cable (1) comprising a flexible core (3) around which a coil (4) is wrapped, comprising a carrier (2) and a stop body (9), wherein the core (3) protrudes beyond the coil (4) with an end area and passes through a hole (7) of the carrier (2), which bears against the end (5) of the coil (4) on one end and bears against the stop body (9), which is fastened to the end of the core (3) of the hole (7) on the other end of the hole (7), wherein the end area of the coil (4) is provided with a cast metal body (11), which encloses the coil (4) and the core (3).

2. The pitched cable according to claim 1, **characterised in that** the abutting surfaces of the cast metal body (11) and of the carrier (2) are embodied with a positive-locking engagement (14), which prevents relative twisting thereof around the core (3).

3. The pitched cable according to any one of the preceding claims, **characterised in that** the cast metal body (11) is embodied as zinc die cast body.

## Revendications

1. Câble d'entraînement (1) avec un noyau flexible (3) enveloppé d'une spirale (4), avec un entraîneur (2) et une butée (9), une section d'extrémité du noyau (3) dépassant de la spirale (4) et traversant un alésage (7) de l'entraîneur (2) qui, à une extrémité de l'alésage (7), s'appuie contre l'extrémité (5) de la spirale (4) et, à l'autre extrémité de l'alésage (7), contre le corps de butée (9) fixé à l'extrémité du noyau (3), la section d'extrémité de la spirale (4) étant munie d'un corps métallique coulé (11) qui entoure la spirale (4) et le noyau (3).

2. Câble d'entraînement selon la revendication 1, **caractérisé en ce que** les surfaces contiguës du corps métallique coulé (11) et de l'entraîneur (2) sont conçues pour un accouplement (14) par complémentarité de forme empêchant une torsion relative autour du noyau (3).

3. Câble d'entraînement selon l'une des revendications précédentes, **caractérisé en ce que** le corps métallique coulé (11) est réalisé sous forme de corps de zinc moulé sous pression.
